# EUROPÄISCHE PATENTANMELDUNG

(11) **EP 2 520 523 A1**
(43) Veröffentlichungstag der Anmeldung: **07.11.2012**
(21) Anmeldenummer: 12165927.0
(22) Anmeldetag: 27.04.2012
(51) Int. Cl.: B65G 57/30, B65G 35/00

(54) **Vorrichtung zum Transport, Vereinzeln, Abstoppen und/oder Magazinieren von eigenstabilen Werkstücken**

(30) Priorität: 02.05.2011 DE 102011100204
(71) Anmelder: Robert Bürkle GmbH, 72250 Freudenstadt (DE)
(72) Erfinder: Koch, Thorsten, 32120 Hiddenhausen (DE); Sprint, Hubert, 32108 Bad Salzuflen (DE)
(74) Vertreter: Lemcke, Brommer & Partner

(57) **Zusammenfassung**

Die vorliegende Erfindung betrifft eine Vorrichtung zum Transport, Vereinzeln, Abstoppen und/oder Magazinieren von eigenstabilen Werkstücken (1), umfassend eine Transportstrecke (2), zum Bewegen der Werkstücke (1) in einer Transportrichtung (4), sowie, in Transportrichtung (4) gesehen, seitlich rechts und links neben der Transportstrecke (2) angeordnete Führungen (6) für die Werkstücke (1). Die Führungen (6) sind mit Mitteln (7) zum Antreiben, Halten und/oder Bremsen der Werkstücke (1) versehen, wobei diese Mittel (7) aus elastisch nachgiebigem Material gebildet sind.

## Beschreibung

Die Erfindung betrifft eine Vorrichtung zum Transport, Vereinzeln, Abstoppen und/oder Magazinieren von eigenstabilen Werkstücken nach dem Oberbegriff des Anspruchs 1. Eine solche Vorrichtung umfasst demnach eine Transportstrecke zum Bewegen der Werkstücke in einer Transportrichtung, sowie, in Transportrichtung gesehen, seitlich rechts und links neben der Transportstrecke angeordnete Führungen für die Werkstücke, wobei die Führungen mit Mitteln zum Antreiben, Halten und/oder Bremsen der Werkstücke versehen sind.

Eigenstabile Werkstücke im Sinne der vorliegenden Erfindung sind solche Werkstücke, die von den an den seitlichen Führungen angeordneten Mitteln zum Antreiben, Halten und/oder Bremsen gegriffen und insbesondere geklemmt werden können, ohne dass sie beschädigt werden oder durch Formveränderung soweit nachgeben, dass eine Klemmung oder Haltekraft zwischen den beiden seitlichen Führungen wegen der ausbleibenden Gegenkraft unmöglich wird. Hierbei können die Werkstücke durchaus an sich wenig stabil oder leicht elastisch verformbar sein; wichtig ist nur, dass deren Eigenstabilität, zu der nicht nur ihre Formstabilität, sondern auch ihr Gewicht beiträgt, ein seitliches Ergreifen von den seitlichen Führungen aus ermöglicht.

Insbesondere Werkstücke mit geringer Dichte, wie Dämmstoffplatten und sonstige Hartschaumplatten, stoßen oft auf Probleme beim automatisierten Transport, beim Stapeln und beim Vereinzeln, da das Gewicht der Werkstücke oftmals nicht ausreicht, um eine Haftreibung zu Förderbändern und dergleichen Fördermitteln zu erzeugen, die ein Verrutschen auf dem Fördermittel ausschließt, oder hohe Beschleunigungen, insbesondere beim Abbremsen, störungsfrei ermöglicht. Hinzu kommt, dass die Oberflächen von insbesondere Hartschaumplatten recht empfindlich sind, so dass das Abbremsen an Anschlägen sowie das Vereinzeln mittels Klinken, Greifern und dergleichen kaum möglich ist, ohne die empfindlichen Oberflächen der Werkstücke zu beeinträchtigen. Ähnliche Probleme entstehen beim Stapeln von insbesondere Hartschaumplatten, da deren Oberflächen zueinander hohe Reibungskoeffizienten aufweisen, so dass ein Gegeneinander-Verschieben mit Widerständen verbunden ist, während das Abwerfen auf einen Stapel, wie dies beispielsweise bei Metallblechen üblich ist, wegen deren geringen Dichte und dem großen Einfluss des Luftwiderstands auf Schwierigkeiten stößt. Auch sonstige Werkstücke mit empfindlichen Oberflächen, wie beispielsweise bedruckte Holzwerkstoffplatten, können nur bedingt automatisiert vereinzelt und gestapelt werden, ohne die bedruckte Oberfläche zu beeinträchtigen.

Das Handling von eigenstabilen Werkstücken, insbesondere Dämmstoffplatten und dergleichen aus Schaumstoff gebildeten Materialien, mittels Robotergreifern ermöglicht zwar, die oben genannten Probleme zu lösen, bedeutet jedoch auch einen erheblichen zusätzlichen konstruktiven und steuerungstechnischen Aufwand. Darüber hinaus ist der Arbeitsgeschwindigkeit von Robotergreifern als Handlingsgeräten eine Grenze nach oben gesetzt.

Der vorliegenden Erfindung liegt daher die Aufgabe zugrunde, eine Vorrichtung zum Transport, Vereinzeln, Abstoppen und/oder Magazinieren von eigenstabilen Werkstücken vorzuschlagen, mit der auch Werkstücke mit empfindlichen Oberflächen und/oder geringen Dichten schonend, exakt und unaufwändig automatisiert gehandhabt werden können.

Gelöst ist diese Aufgabe durch eine Vorrichtung mit den Merkmalen des Anspruchs 1. Vorteilhafte Ausgestaltungen und Weiterbildungen der erfindungsgemäßen Vorrichtung finden sich in den Ansprüchen 2 bis 10. Eine bevorzugte Verwendung der erfindungsgemäßen Vorrichtung ist im Anspruch 11 niedergelegt.

Gemäß der vorliegenden Erfindung sind also die Mittel zum Antreiben, Halten und/oder Bremsen der Werkstücke, mit denen die rechts und links neben der Transportstrecke angeordneten Führungen versehen sind, aus elastisch nachgiebigem Material gebildet. Die Nachgiebigkeit dieses Materials ist erfindungsgemäß im Hinblick auf die Werkstücke zu verstehen, denn die Werkstücke müssen eine geringere Nachgiebigkeit als das erfindungsgemäße elastisch nachgiebige Material besitzen. Somit können die Werkstücke zwischen die in den Führungen angeordneten Mittel zum Antreiben, Halten und/oder Bremsen eingeschoben werden, da diese Mittel nachgiebig sind. Die elastische Nachgiebigkeit führt hierbei dazu, dass die Mittel anschließend eine elastische Haltekraft auf das zwischen ihnen eingeschobene Werkstück ausüben, so dass das Werkstück hierdurch gehalten wird sowie angetrieben oder gebremst werden kann. Durch die Nachgiebigkeit dieser Mittel sind Beschädigungen des Werkstücks oder seiner Seitenflächen nicht zu befürchten; insbesondere bleiben die anderen Flächen des Werkstücks wie beispielsweise die beiden Hauptflächen einer Platte, also deren gegebenenfalls bedruckten Ober- und Unterseiten, vollständig unbeeinflusst.

Die Werkstücke werden in einer erfindungsgemäßen Vorrichtung also zwischen den in den seitlichen Führungen angeordneten Mitteln zum Antreiben, Halten und/oder Bremsen gehalten, oder es wird von diesen Mitteln eine Beschleunigungskraft auf die Werkstücke ausgeübt, ohne diese im eigentlichen Sinne zu halten. Als Materialien für die Mittel zum Antreiben, Halten und/oder Bremsen der Werkstücke können, je nach Werkstückmaterial, viele unterschiedliche Materialien verwendet werden, wobei beispielsweise ein Gel, ein Schaumstoff, Kokosmatten und dergleichen zu nennen sind. Insbesondere sind jedoch Materialien wie Bürsten, Pinsel, Felle und dergleichen Elemente mit elastischen Haaren, Drähten oder Borsten besonders vorteilhaft zu verwenden.

Insbesondere mit bürstenartigen und bürstenähnlichen Materialien, die durch geeignete Winkelstellung oder Ausrichtung unterschiedliche Kräfte in und gegen die Transportrichtung auf die Werkstücke ausüben können, ist es möglich, eine bevorzugte Ausgestaltung der Erfindung zu realisieren, die darin besteht, die Werkstücke mittels eines Förderantriebs, beispielsweise eines normalen Förderbands oder angetriebenen Förderrollen, entlang der Transportstrecke in Transportrichtung zu bewegen und die Mittel zum Antreiben, Halten und/oder Bremsen der Werkstücke derart mit diesem Förderantrieb zusammenwirkend auszugestalten, dass sie eine Transportbewegung des Werkstücks in Transportrichtung zulassen, jedoch eine Rückbewegung des Werkstücks verhindern. Die erfindungsgemäßen Mittel zum Antreiben, Halten und/der Bremsen werden nach dieser bevorzugten Ausgestaltung der Erfindung also wie Rückschlagventile nach Art der Venenklappen im menschlichen Blutkreislauf eingesetzt.

Dies kann beispielsweise dann große Vorteile bieten, wenn Werkstücke gegen einen Anschlag gefördert werden und wegen einer Elastizität der Werkstücke die Gefahr besteht, dass diese ungewollt vom Anschlag wieder zurückspringen; dies ist beispielsweise bei Dämmstoffplatten der Fall. Wenn erfindungsgemäß seitlich rechts und links neben der Transportstrecke Führungen für die Werkstücke angeordnet sind, in denen Mittel zum Antreiben, Halten und/oder Bremsen aus elastisch nachgiebigem Material sitzen, können die Werkstücke vor dem Anschlag abgebremst werden. Wenn die Mittel so ausgebildet sind, dass sie eine Transportbewegung des Werkstücks in Transportrichtung zulassen, jedoch eine Rückbewegung des Werkstücks verhindern, verhindern sie ein Zurückspringen des Werkstücks vorteilhafterweise sogar dann, wenn das Werkstück vor dem Auftreffen auf den Anschlag gar nicht abgebremst wird.

Die Mittel zum Antreiben, Halten und/oder Bremsen der Werkstücke können in diesem Fall beispielsweise - und besonders vorteilhaft - im Wesentlichen aus Rollen mit einem Freilauf gebildet sein, wobei die Rollen mit dem erfindungsgemäßen elastisch nachgiebigem Material belegt sind. Besondere Vorteile ergeben sich hierbei wiederum, wenn dieses elastisch nachgiebige Material eine Bürste, ein Pinsel, ein Fell oder dergleichen ist, denn diese Materialien verstärken den Effekt des Freilaufs der Rolle.

Die erfindungsgemäße Vorrichtung kann an einer horizontalen Förderstrecke realisiert werden, wo diejenigen Funktionen der elastisch nachgiebigen Mittel im Vordergrund stehen, die die Werkstücke antreiben und/oder bremsen, oder beispielsweise an einem Zurückspringen hindern.

Die Transportrichtung einer erfindungsgemäßen Vorrichtung kann jedoch genauso vorteilhaft auch im Wesentlichen vertikal verlaufen, wobei dann die Haltefunktion der Mittel zum Antreiben, Halten und/oder Bremsen der Werkstücke im Vordergrund steht. Denn wenn die Transportrichtung im wesentlichen vertikal verläuft, kann die Transportstrecke zum Magazinieren von Werkstücken verwendet werden.

Hierzu ist dann ein Antrieb, beispielsweise eine Anhebevorrichtung, zweckmä-βig, die die Werkstücke, ausgehend von einer Ausgangsposition, um mindestens die Höhe eines Werkstücks anhebt und dann wieder in die Ausgangsposition zurückkehrt. Durch die Haltefunktion der erfindungsgemäß ausgestalteten seitlichen Führungen bleiben die Werkstücke in der angehobenen Position gehalten und können mit der darauf folgenden Anhebebewegung, die ein weiteres Werkstück von unten nachschiebt, um eine Höhenposition nach oben versetzt werden. Dies führt dazu, dass eine Mehrzahl von Werkstücken, insbesondere plattenförmigen Werkstücken definiert übereinandergestapelt werden kann, ohne eine freie Fallstrecke vorzusehen und ohne dass die Oberflächen der Werkstücke aufeinander reiben und dadurch gegebenenfalls Qualitätseinbußen erleiden. Gleichzeitig werden die Werkstücke nach oben gestapelt, so dass die Stapelhöhe nicht durch die Arbeitshöhe über dem Boden oder die Tiefe einer Grube limitiert ist, wie dies beim bisher üblichen Abwurf der Werkstücke zum Stapeln derselben der Fall ist.

Weitere erhebliche Vorteile ergeben sich bei einer vertikal verlaufenden Transportrichtung dann, wenn die Führungen mit den Mitteln zum Antreiben, Halten und/oder Bremsen der Werkstücke ihrerseits auf bewegbaren Halterungen, insbesondere umlaufenden Ketten oder Riemen, befestigt sind, die senkrecht zur Transportrichtung bewegt werden können. Denn wenn der vertikale Stapel entnommen werden soll, um einen neuen Stapel bilden zu können, müssen dann lediglich die senkrecht bewegbaren Halterungen bewegt werden, so dass die Führungen mitsamt dem dazwischen gehaltenen Stapel senkrecht zur Transportrichtung aus der Transportstrecke herausbewegt werden.

Eine erfindungsgemäße Vorrichtung mit vertikal verlaufender Transportstrecke kann vorteilhafterweise auch als Hochleistungsbeschickungssystem für einen Hängebandförderer und dergleichen eingesetzt werden. Hierzu werden die Mittel zum Antreiben, Halten und/oder Bremsen, insbesondere Bürstenleisten, in Transportrichtung, nach oben bewegbar ausgebildet, um mit den Bürstenleisten die Werkstücke in vertikaler Richtung nach oben zu fördern. Eine herkömmlich ausgebildete Zuführfördervorrichtung zum horizontalen aufliegenden Transport der Werkstücke bis zu einem unteren Bereich der vertikalen Transportstrecke bringt die Werkstücke heran, wo sie von den Bürstenleisten oder dergleichen übernommen und nach oben an eine Abführfördervorrichtung zum horizontalen hängenden Transport der Werkstücke übergeben werden. Die Übergabe der Werkstücke von der Zuführfördervorrichtung, beispielsweise einem normalen Förderband, zum Hängeförderer erfolgt hierbei kontinuierlich, ohne Leerhub, so dass eine hohe Taktleistung bei geringer horizontaler Geschwindigkeit der Werkstücke möglich ist. Der große Vorteil der erfindungsgemäß aus elastisch nachgiebigem Material gebildeten Mittel zum Antreiben, Halten und/oder Bremsen besteht in diesem Zusammenhang darin, dass bei einer Fehlfunktion keinerlei Beschädigung der Werkstücke zu befürchten ist; diese können gegebenenfalls im Vertikalförderer einfach durchrutschen, soweit dessen Haltekraft entsprechend eingestellt ist.

Schließlich besteht eine weitere bevorzugte Ausgestaltung der erfindungsgemäßen Vorrichtung darin, dass die Führungen senkrecht bzw. quer zur Transportrichtung verfahrbar sind, um die Ausrichtung der Werkstücke justieren zu können, die Werkstücke bedarfsweise freigeben zu können und insbesondere den Abstand der Führungen zueinander variieren zu können, um Werkstücke unterschiedlicher Breite aufzunehmen. Ferner ist es mit solch verstellbaren Führungen möglich, die Vorspannung des elastisch nachgiebigen Materials gegen die Werkstücke zu regulieren, um insbesondere eine Haltekraft gezielt einstellen und verändern zu können.

Ein Ausführungsbeispiel für eine erfindungsgemäß ausgestaltete Vorrichtung wird im folgenden anhand der beigefügten Zeichnungen näher beschrieben und erläutert. Es zeigen:
- Figur 1: eine schematische perspektivische Darstellung einer Maschine zum Stapeln von Dämmstoffplatten, in der zwei erfindungsgemäße Vorrichtungen realisiert sind, eine mit horizontaler und eine mit vertikaler Förderstrecke;
- Figur 2: eine Draufsicht auf eine in der vertikalen Förderstrecke in Figur 1 verwendete Bürstenrolle;
- Figur 3: einen seitlichen Schnitt durch die Bürstenrolle nach Figur 2;
- Figur 4: eine perspektivische Darstellung der Vorrichtung aus Figur 1, wobei die vertikale Förderstrecke in den Vordergrund gerückt ist;
- Figur 5: eine Draufsicht auf die Vorrichtung mit vertikaler Förderstrecke aus Figur 4;
- Figur 6: eine Seitenansicht der in Figur 5 gezeigten Vorrichtung.

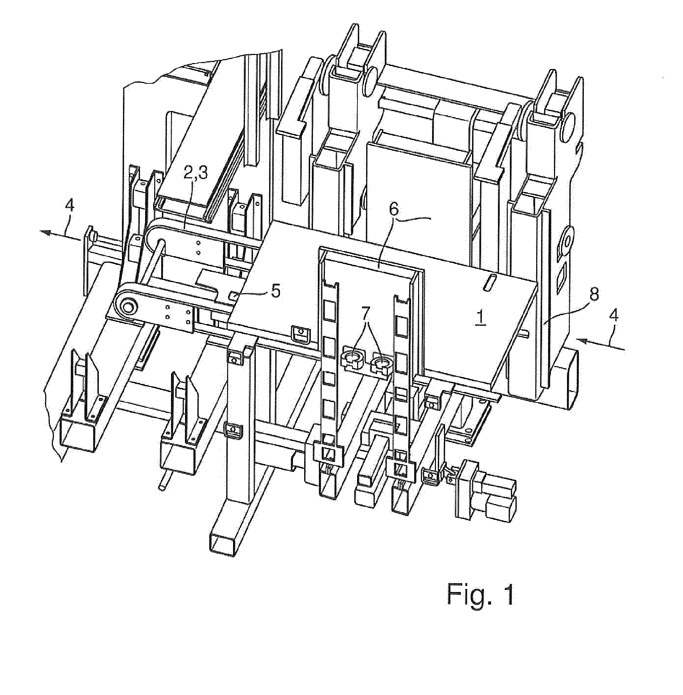

Figur 1 zeigt in einer schematischen perspektivischen Darstellung eine Maschine zum automatisierten Abbremsen und Stapeln von Dämmstoffplatten 1 aus Hartschaum. Die Dämmstoffplatten 1 kommen auf einer ersten, horizontalen Transportstrecke 2, die mit Förderbändern 3 versehen ist, in einer Transportrichtung 4 vom rechten Bildrand her an und laufen gegen einen Anschlag 5, wo sie abgestoppt werden. Erfindungsgemäß sind erste seitliche Führungen 6 vorhanden, zwischen denen die Dämmstoffplatte 1 hindurch transportiert wird. In den seitlichen Führungen 6 sind als Mittel zum Antreiben, Halten und/oder Bremsen jeweils zwei Bürstenrollen 7 mit vertikal verlaufenden Drehachsen montiert, die mit einem Freilauf versehen sind. Diese Bürstenrollen 7 drehen sich mit der Dämmstoffplatte 1 mit, wenn sich diese in Transportrichtung 4 bewegt und sperren die Bewegung, wenn sich die Dämmstoffplatte 1 gegen die Transportrichtung 4 bewegen möchte, weil sie etwa vom Anschlag 5 zurückspringen will. Die Bürstenrollen 7 stellen demnach erfindungsgemäß sicher, dass die Dämmstoffplatte 1 mit relativ hoher Geschwindigkeit über die Transportstrecke 2 bis an den Anschlag 5 gefördert werden kann und dort in definierter Position gehalten wird, ohne aufwändige Regelungsmechanismen oder Handlingselemente vorsehen zu müssen. Gleichzeitig wird die Dämmstoffplatte 1 bzw. werden deren Oberflächen geschont, da die Bürstenrollen 7 elastisch nachgiebig sind und sich nur gegen die ungewollte Rückbewegung der Dämmstoffplatte 1 sperren. Gegebenenfalls können die Bürstenrollen 7 die Dämmstoffplatten 1 vor Erreichen des Anschlags auch schonend abbremsen. Durch die Anordnung von zwei Bürstenrollen 7 auf jeder Seite der Dämmstoffplatte 1 wird außerdem eine definierte Mittenposition und Winkelposition der Dämmstoffplatte 1 sichergestellt.

Mittels einer Anhebeeinrichtung 8 wird die Dämmstoffplatte 1 danach nach oben von der Transportstrecke 2 weg angehoben und, wie nachfolgend näher beschrieben wird, nach oben gestapelt.

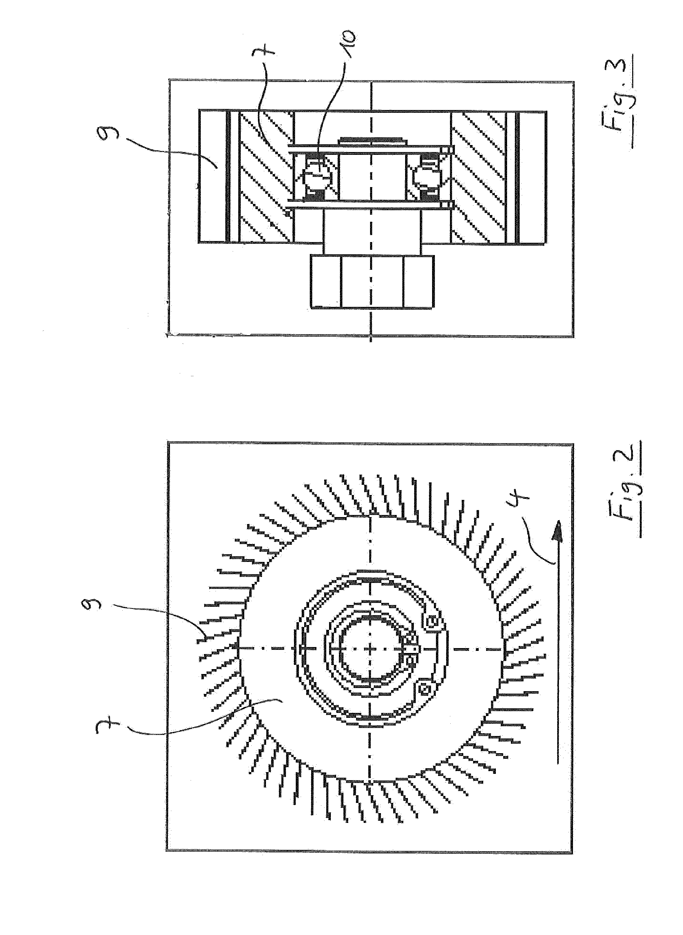

Die Figuren 2 und 3 zeigen eine Draufsicht (Figur 2) und einen Schnitt (Figur 3) auf bzw. durch eine Bürstenrolle 7 aus Figur 1. Wie anhand Figur 2 gut zu erkennen ist, ist die Bürstenrolle 7 mit einem Bürstenbelag 9 mit nicht radial ausgerichteten Borsten, sondern mit schräg gestellten Borsten versehen. Wenn die in Figur 2 gezeigte Bürstenrolle 7 einen Freilauf aufweist, der eine Bewegung gegen den Uhrzeigersinn zulässt, jedoch eine Bewegung im Uhrzeigersinn sperrt, führt die Schrägstellung der Borsten der Bürstenrolle 7 zu einer hohen Haltekraft gegen die Transportrichtung 4, während die Borsten 9 gleichzeitig sehr leicht elastisch nachgeben, wenn ein Werkstück entlang der Transportrichtung 4 an der Bürstenrolle 7 entlangläuft. Die Bürstenrolle 7 läuft auf einem Kugellager 10 und ist, wie erwähnt, mit einem Freilauf ausgestattet.

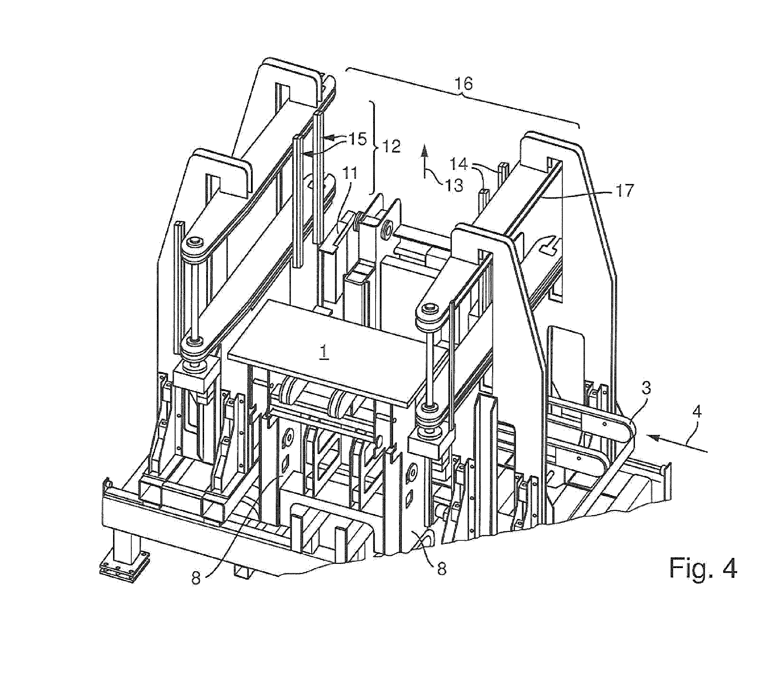

Figur 4 zeigt wiederum eine perspektivische Darstellung der Maschine aus Figur 1, wobei jedoch diesmal die Aufwärtsbewegung der Dämmstoffplatte 1 durch die Anhebevorrichtung 8 sowie insbesondere die zweite, vertikal verlaufende Transportstrecke 12 mit einer vertikalen Transportrichtung 13 im Vordergrund steht.

Nachdem die Dämmstoffplatte 1 in der horizontalen Transportrichtung 4 mittels der Förderbänder 3 in den Einzugsbereich der Anhebeeinrichtung 8 gelangt ist und dort (vgl. Figur 1) mittels erfindungsgemäßer Bürstenrollen 7 abgestoppt und in eine definierte Position gebracht wurde, hebt die Anhebeeinrichtung 8 die Dämmstoffplatte 1 an und bringt sie in eine zweite, vertikale Transportstrecke 12 mit vertikaler Transportrichtung 13. In der vertikalen Transportstrecke 12 sind beidseits jeweils zwei erfindungsgemäße vertikale Führungen 14 vorgesehen, die mit Bürstenleisten 15 belegt sind. Sobald die Dämmstoffplatte 1 durch die Anhebeeinrichtung 8 nach oben zwischen die Führungen 14 geschoben wird, wird die Dämmstoffplatte 1 durch die elastische Nachgiebigkeit der Bürstenleisten 15 dort gegen die Schwerkraft gehalten, so dass die Anhebeeinrichtung 8 wieder in ihren Ausgangszustand zurückfahren kann. Die vorliegend verwendete Anhebeeinrichtung 8 hebt die Dämmstoffplatten 1 mittels Nocken 11 an, die innerhalb der Transportstrecke 12 nach oben bewegt, im obersten Punkt ihrer Bewegung in einer Kreisbewegung aus der Transportstrecke 12 herausgezogen, außerhalb der Transportstrecke 12 wieder nach unten bewegt und im unteren Umkehrpunkt ihrer Bewegung wiederum in die Transportstrecke 12 eingebracht werden, um eine erneute Anhebebewegung durchführen zu können. Soweit mehrere Nocken, hier zwei Nocken in einem Tandemnockensystem, vorhanden sind, entfällt ein Leerhub der Anhebeeinrichtung 8 in ihren Ausgangszustand, da in jeder Bewegungsphase eine Nocke 11 eine Anhebebewegung durchführt.

Wenn eine zweite Dämmstoffplatte 1 von der Anhebeeinrichtung 8 nach oben geschoben wird, schiebt diese die erste Dämmstoffplatte 1 in dem durch die vertikalen Führungen 14 und deren Bürstenleisten 15 gebildeten Magazin 16 ein Stück weiter nach oben, so dass sich nach und nach ein Stapel bildet, der durch die Haltekraft der Bürstenleisten 15 gehalten wird. Hierbei wirkt auf jede einzelne Dämmstoffplatte 1 des gesamten Stapels nur die Gewichtskraft dieser Platte selbst, nicht jedoch der über ihr liegenden Platten, was hinsichtlich etwaiger empfindlicher Oberflächen sehr vorteilhaft ist. Der Transport in der vertikalen Transportstrecke 12 in Transportrichtung 13 erfolgt demnach über eine Ventilfunktion, die durch die elastisch nachgiebigen Bürstenleisten 15 erzeugt wird. Wenn der Stapel innerhalb der Führungen 14 bzw. der Transportstrecke 12 fertig aufgestapelt ist, werden umlaufende Riemen 17 betätigt, auf denen die Führungen 14 befestigt sind. Diese umlaufenden Riemen 17 bewirken, dass die Führungen 14 senkrecht zur vertikalen Transportrichtung 13, also wiederum in horizontaler Richtung, als Stapel aus der in Figur 4 dargestellten Maschine nach vorne oder nach hinten ausgefördert werden. Die umlaufenden Riemen 17 verfügen über weitere Führungen 14 mit Bürstenleisten 15, so dass ein halber Umlauf der Riemen 17 genügt, um einen neuen Stapel Dämmstoffplatten 1 in den dann in der Transportstrecke 12 liegenden Führungen 14 aufnehmen zu können. Anstelle der hier dargestellten Riemen 17 können auch Zugelemente anderer Art, wie beispielsweise Ketten, Seile, Zahnriemen und dergleichen verwendet werden.

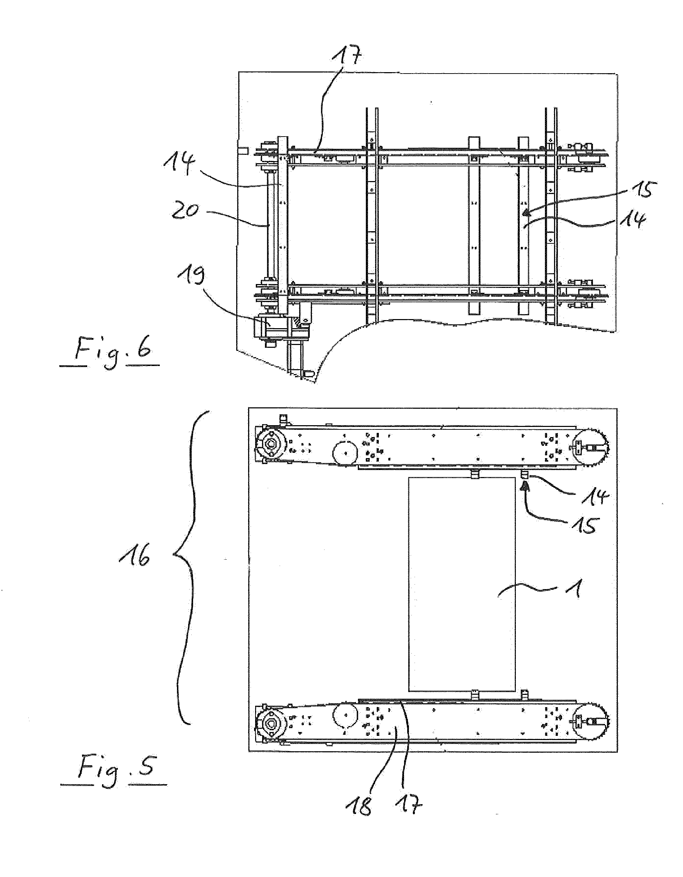

Die Figuren 5 und 6 zeigen eine Draufsicht (Figur 5) bzw. eine Seitenansicht (Figur 6) des Magazins 16 aus Figur 4, wobei identische Bauteile mit identischen Bezugszeichen versehen sind, so dass insofern auf die Figurenbeschreibung der Figur 4 verwiesen werden kann.

Anzumerken wäre noch, dass die Riemen 17 jeweils um ein Gehäuse 18 umlaufen und von einem Motor 19 über eine gemeinsame Antriebswelle 20 betätigt werden, um einen fertigen Stapel von Dämmstoffplatten 1 horizontal auszufördern.

Die in den Figuren 1 bis 6 dargestellte Maschine dient demnach zum Abstoppen, Positionieren und Stapeln von Dämmstoffplatten sowie zum definierten Ausgeben des fertigen Stapels. Hierzu sind in dieser Maschine zwei erfindungsgemäße Vorrichtungen verkettet, eine erste mit horizontaler Transportstrecke zum Einlauf der Dämmstoffplatten und zum definierten Abstoppen, und eine zweite mit vertikal nach oben gerichteter Transportstrecke zum Erzeugen eines von unten her anwachsenden Stapels mit Dämmstoffplatten, so das diese magaziniert werden. Der fertige Stapel kann dann, wiederum in horizontaler Richtung, mittels Bewegen der seitlichen Führungen mit Bürstenleisten zur Weiterverarbeitung oder zum Weitertransport hochdynamisch mit hoher Durchsatzleistung ausgegeben werden.

## Patentansprüche

1. Vorrichtung zum Transport, Vereinzeln, Abstoppen und/oder Magazinieren von eigen stabilen Werkstücken (1), umfassend eine Transportstrecke (2, 12) zum Bewegen der Werkstücke (1) in einer Transportrichtung (4,13), sowie, in Transportrichtung (4, 13) gesehen, seitlich rechts und links neben der Transportstrecke (2, 12) angeordnete Führungen (6, 14) für die Werkstücke (1), wobei die Führungen (6, 14) mit Mitteln (7, 15) zum Antreiben, Halten und/oder Bremsen der Werkstücke (1) versehen sind,
**dadurch gekennzeichnet,**
**dass** die Mittel (7, 15) zum Antreiben, Halten und/oder Bremsen der Werkstücke (1) aus elastisch nachgiebigem Material gebildet sind.

2. Vorrichtung nach Anspruch 1,
**dadurch gekennzeichnet,**
**dass** die Mittel (7, 15) zum Antreiben, Halten und/oder Bremsen der Werkstücke (1) aus Bürstenelementen oder dergleichen gebildet sind.

3. Vorrichtung nach einem der Ansprüche 1 oder 2,
**dadurch gekennzeichnet,**
**dass** die Werkstücke (1) mittels eines Förderantriebs (3, 8) in Transportrichtung (4, 13) entlang der Transportstrecke (2, 12) bewegbar sind, und dass die Mittel (7, 15) zum Antreiben, Halten und/oder Bremsen der Werkstücke (1) derart mit dem Förderantrieb (3, 8) zusammenwirkend ausgestaltet sind, dass sie eine Transportbewegung des Werkstücks (1) in Transportrichtung (4, 13) zulassen, jedoch eine Rückbewegung des Werkstücks (1) gegen die Transportrichtung (4, 13) verhindern.

4. Vorrichtung nach Anspruch 3,
**dadurch gekennzeichnet,**
**dass** die Mittel (7, 15) zum Antreiben, Halten und/oder Bremsen der Werkstücke (1) Rollen (7) mit einem Freilauf (11) umfassen, die mit elastisch nachgiebigem Material belegt, insbesondere als Rollenbürsten (7) ausgebildet sind.

5. Vorrichtung nach einem der Ansprüche 3 oder 4,
**dadurch gekennzeichnet,**
**dass** die Mittel (7, 15) zum Antreiben, Halten und/oder Bremsen der Werkstücke (1) Bürstenleisten (15), Fellstreifen, Pinselleiten und dergleichen umfassen.

6. Vorrichtung nach mindestens einem der Ansprüche 3 bis 5,
**dadurch gekennzeichnet,**
**dass** die Transportrichtung (4) im wesentlichen horizontal verläuft und der Förderantrieb aus einem Förderband (3), einer Rollenbahn oder dergleichen Fördermittel zum aufliegenden oder hängenden Transport der Werkstücke (1) besteht.

7. Vorrichtung nach mindestens einem der Ansprüche 3 bis 5,
**dadurch gekennzeichnet,**
**dass** die Transportrichtung (13) im wesentlichen vertikal verläuft und der Förderantrieb aus einer Einrichtung (8) zum Anheben der Werkstücke besteht, die so ausgebildet ist, dass sie die Werkstücke (1), ausgehend von einer Ausgangsposition, um mindestens die Höhe eines Werkstücks (1) anhebt.

8. Vorrichtung nach Anspruch 7,
**dadurch gekennzeichnet,**
**dass** die Führungen (14) mit den Mitteln (15) zum Antreiben, Halten und/oder Bremsen der Werkstücke auf senkrecht zur Transportrichtung (13) bewegbaren Halterungen, insbesondere umlaufenden Ketten oder Riemen (17), befestigt sind.

9. Vorrichtung nach mindestens einem der Ansprüche 1 bis 8,
**dadurch gekennzeichnet,**
**dass** die Mittel zum Antreiben, Halten und/oder Bremsen entlang einer vertikal verlaufenden Transportstrecke angeordnet und in Transportrichtung bewegbar sind, um die Werkstücke in Transportrichtung zu fördern, und dass eine Zuführfördervorrichtung zum horizontalen aufliegenden Transport der Werkstücke bis zu einem unteren Bereich der Transportstrecke sowie eine Abführfördervorrichtung zum horizontalen hängenden Transport der Werkstücke weg von einem oberen Bereich der Transportstrecke vorgesehen sind.

10. Vorrichtung nach mindestens einem der Ansprüche 1 bis 9,
**dadurch gekennzeichnet,**
**dass** die Führungen (6, 14) senkrecht zur Transportrichtung (4, 13) verfahrbar sind, um insbesondere den Abstand zueinander und/oder eine Haltekraft zu variieren.

11. Verwendung der Vorrichtung nach mindestens einem der Ansprüche 1 bis 10 zum Stapeln, Vereinzeln und/oder Beschicken von plattenförmigen eigenstabilen Werkstücken geringer Dichte, insbesondere von Dämmstoffplatten
